# EUROPEAN PATENT APPLICATION

(11) **EP 2 511 794 A1**
(43) Date of publication of application: **17.10.2012**
(21) Application number: 11162706.3
(22) Date of filing: 15.04.2011
(51) Int. Cl.: G06F 3/023

(54) **A portable electronic device having user-configurable multi-function key entry timeout**

(71) Applicant: Doro AB, 226 43 Lund (SE)
(72) Inventor: Cullin, Peter, 245 44, Staffanstorp (SE); Krokstäde, Calle, Tai Wai, Sha Tin Hong Kong (CN)
(74) Representative: Ström & Gulliksson AB

(57) **Abstract**

A portable electronic device is presented which has a display (430) and a keypad (440) having a plurality of keys (204a; 254a). At least some of the keys have multiple functions, specifically such that when a time lapse between two successive actuations of one and the same particular key is shorter than a threshold delay time (*multiTap_delay*)*,* a first action is taken on the display, whereas otherwise a second action is taken on the display. The device has control means (460) for user-configurable setting of the threshold delay time.

## Description

### Technical Field

The present invention generally relates to the field of portable electronic equipment, and more particularly to a portable electronic device of the type that has a keypad with a plurality of keys, at least some of which have multiple functions, specifically such that when a time lapse between two successive actuations of one and the same particular key is shorter than a threshold delay time, a first action is taken on the display, whereas otherwise a second action is taken on the display.

### Background

Portable electronic equipment comes in many different brands, shapes and types. One very common example is a mobile terminal, such as a mobile telephone for a mobile telecommunications system like GSM, UMTS, D-AMPS, CDMA2000, FOMA or TD-SCDMA. Other examples include personal digital assistants (PDA:s), portable media players (e.g. MP3 players), palmtop computers, digital cameras, game consoles, navigators, etc. A mobile terminal in the form of a mobile telephone will be used as a non-limiting example of a portable electronic device in the following.

In the early days of mobile telecommunications, the mobile terminals were used for speech communication only. The situation has of course changed dramatically since then. Nowadays, mobile terminals are also frequently used for professional, personal and recreational services and thus contain a plurality of application programs such as calendar, messaging, word processing, www browsing, etc. For many if not all of these additional services, there is a need for the user to input text on the mobile terminal.

The prevailing way of inputting text on a mobile terminal is to use a keypad on the terminal. Conventionally, mobile terminals have been provided with a physical (mechanical) keypad with twelve keys representing digits "0" through "9" as well as signs "*" and "#". This kind of keypad, which is commonly known as an ITU-T or a PIN-type keypad, provides the user with all the symbols needed for dialing a telephone number and thus represents a complete symbol set for this type of operation. On the other hand, when text or other kind of data than numbers is to be input, the twelve keys are typically not many enough to represent one possible symbol each. In such a case, an individual key may be assigned multiple functions, such that it may represent more than one possible symbol input. For instance, the "2" key may represent a set of available characters "A", "B" and "C", in addition to or instead of the number "2". Correspondingly, the "3" key may represent another set of available characters "D", "E" and "F", in addition to or instead of the number "3", and so on.

By repeatedly actuating for instance the "2" key, the user may cycle through this set of available symbols as presented at the current cursor position on the display. When the desired symbol, such as "C", is shown on the display, the user may either actuate another key on the keypad, or wait a certain time without any further actuation of any of the keys. In both cases, the shown desired symbol will be accepted by the text entry functionality of the mobile terminal, and the cursor will be advanced one step on the display. This mode of data entry is referred to as *multi-tap text entry,* or simply *multi-tap entry,* in the remainder of this document, and a keypad capable of such data entry is referred to as a *multi-tap keypad.*

In multi-tap entry, the time period that must lapse before the currently shown symbol is accepted and the cursor is advanced, is referred to as a *threshold delay time* or, synonymously, *multi-tap timeout period.* Phrased differently, when the threshold delay time has lapsed without any intermediate key actuation, a timeout occurs, and the cursor is advanced. On the other hand, if one and the same key is repeatedly actuated more frequently than what the threshold delay time defines, and without intermediate actuation of another key on the keypad, the set of available symbols for the actuated key will be cycled through from the first symbol throughout the last symbol, and then again starting from the first symbol.

In recent years, mobile terminals, also known as smart phones, with touch-sensitive display screens have become increasingly popular. Even though a smart phone does not need a physical keypad thanks to the inherent ability of the touch screen to act also as input device, the concept of multi-tap entry is used in many smart phones. For instance, the Sony Ericsson Xperia X10 Mini series run an Android operating system where a virtual keypad is presented on the touch-sensitive display screen when various different text input fields are tapped. The virtual keypad has a 3x3 grid layout where each element represents a list of available symbols, which may be cycled through sequentially by way of multi-tapping on the respective element.

Therefore, the term multi-tap keypad as used in this document is not limited to physical keypads with mechanical keys.

As already referred to above, a modem mobile terminal is normally provided with a large variety of application programs, most of which need text entry in order to work as intended. Because of its inherent operational principle which is based on a timeout after the lapse of the threshold delay time, it is important to provide text entry in a manner which is efficient to the user and minimizes input errors caused by incorrect symbols entries. This is particularly so when large amounts of data are to be entered, for instance as part of a text message or calendar record, or during the course of filling in a web form in the www browser.

The present inventors have identified some drawbacks with existing multi-tap entry devices. One such identified drawback is that the duration of the threshold delay time is fixed and set by the designers of the terminal hardware or operating system. Whereas these designers may have some freedom is deciding the duration of the threshold delay time (constrained by the performance restrictions of the hardware and operating system), once the design has been completed, the threshold delay time is a fixed property in the mobile terminal.

Moreover, the present inventors have realized that users of mobile terminals are nowadays a very heterogeneous group in which there are considerable variations in terms of age, user experience, physiological motor ability, visual capacity, and general user preference. Existing multi-tap entry devices fail to fully appreciate this.

### Summary

It is accordingly an object of the invention to eliminate or alleviate at least some of the problems referred to above.

One aspect of the present invention is a portable electronic device comprising a display and a keypad having a plurality of keys, at least some of which have multiple functions, specifically such that when a time lapse between two successive actuations of one and the same particular key is shorter than a threshold delay time, a first action is taken on said display, whereas otherwise a second action is taken on said display, wherein the portable electronic device is provided with control means for user-configurable setting of said threshold delay time.

A portable electronic device having a user-configurable multi-function key entry timeout is therefore provided.

Embodiments of the invention are defined by the appended dependent claims and are further explained in the detailed description section.

It should be emphasized that the term "comprises/comprising" when used in this specification is taken to specify the presence of stated features, integers, steps, or components, but does not preclude the presence or addition of one or more other features, integers, steps, components, or groups thereof. All terms used in the claims are to be interpreted according to their ordinary meaning in the technical field, unless explicitly defined otherwise herein. All references to "a/an/the [element, device, component, means, step, etc]" are to be interpreted openly as referring to at least one instance of the element, device, component, means, step, etc., unless explicitly stated otherwise. The steps of any method disclosed herein do not have to be performed in the exact order disclosed, unless explicitly stated.

### Brief Description of the Drawings

Objects, features and advantages of embodiments of the invention will appear from the following detailed description, reference being made to the accompanying drawings, in which:
Fig 1 is a schematic illustration of a non-limiting example of a telecommunication system in which embodiments of the present invention may be exercised;
Fig 2a is a schematic front view of a portable electronic device according to one embodiment of the present invention, in the form of a mobile terminal having a physical keypad with mechanical keys, capable of multi-tap entry;
Fig 2b is a schematic front view of a portable electronic device according to another embodiment of the present invention, in the form of a mobile terminal of smart phone-type, having a touch-sensitive display screen with a virtual keypad presentable thereon, capable of multi-tap entry;
Fig 3 is a schematic block diagram illustrating the basic internal hardware and software layout of the mobile terminal according to any of the embodiments shown in Figs 2a and 2b; and
Fig 4 is a schematic block diagram illustrating some main elements of a portable electronic device enabled for user-configurable setting of the threshold delay time for multi-tap entry in accordance with embodiments of the invention.

### Detailed Description

Embodiments of the invention will now be described with reference to the accompanying drawings. The invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the particular embodiments illustrated in the accompanying drawings is not intended to be limiting of the invention. In the drawings, like numbers refer to like elements.

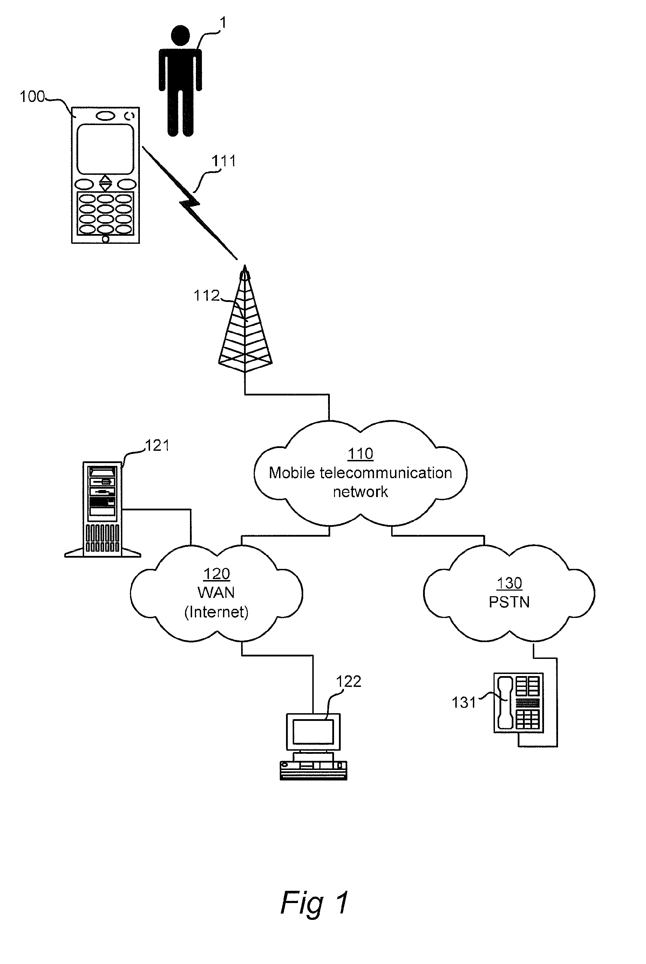

Before turning to a detailed description of the disclosed embodiments, an exemplifying environment in which they may be exercised will now be briefly described with reference to Fig 1.

In Fig 1, a portable electronic device in the form of a mobile terminal 100 is part of a cellular telecommunications system. A user 1 of the mobile terminal 100 may use different telecommunications services, such as voice calls, Internet browsing, video calls, data calls, facsimile transmissions, still image transmissions, video transmissions, electronic messaging, and e-commerce. The invention is however not limited to any particular set of services.

The mobile terminal 100 may connect to a mobile telecommunication network 110 over a radio link 111 and a base station 112. The mobile terminal 100 and the mobile telecommunication network 110 may comply with any commercially available mobile telecommunication standard, for instance (without limitation) GSM, UMTS, D-AMPS, CDMA2000, FOMA and TD-SCDMA. Embodiments of the mobile terminal 100 will be described in closer detail with reference to the following drawings.

A public switched telephone network (PSTN) 130 is connected to the mobile telecommunication network 110. Telephone terminals of PSTN subscribers may connect to the PSTN 130. In Fig 1, a stationary telephone 131 is indicated as a mere example of this.

The mobile telecommunication network 110 is operatively associated with a wide area data network 120, which may be the Internet or a part thereof. Server computers 121 and client computers 122 may be connected to the wide area data network 120 to allow communication with the mobile terminal 100.

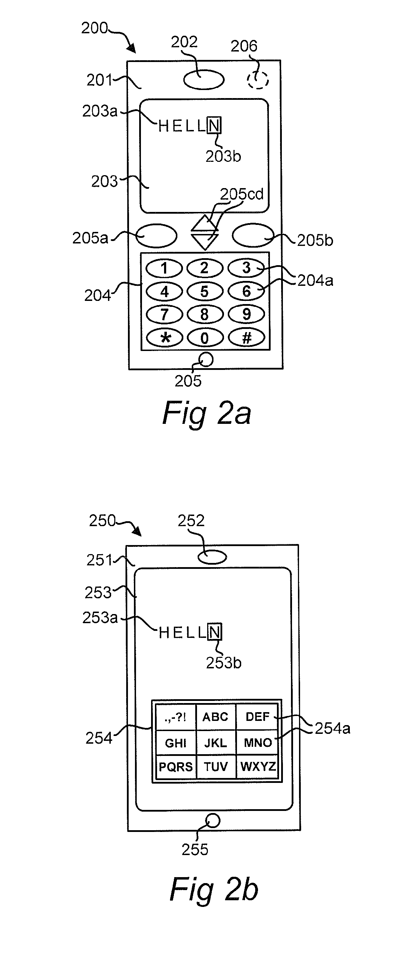

An embodiment 200 of the mobile terminal 100 is illustrated in more detail in Fig 2a. The mobile terminal 200 is of monoblock-type and has a housing that includes a front side 201. The front side 201 has a user interface (UI) or man-machine interface (MMI) which involves a loudspeaker 202, a microphone 205, a display 203, and an ITU-T-type keypad 204. The keypad 204 is a physical (mechanical) keypad with twelve keys representing digits "0" through "9" as well as signs "*" and "#". The keypad 204 is capable of multi-tap entry, for instance to input text 203a on the display 203. In the situation shown in Fig 2a, the user 1 has entered four characters "H", "E", "L", "L" and is about to complete the word "HELLO" by repeatedly actuating the "6" key to cycle through a set of available symbols "6, M, N, O" so as to arrive at the desired "O" character at the current cursor position 203b.

Certain other special keys are also provided, here illustrated as soft keys 205a-b and navigation keys 205c-d. Furthermore, a camera 206 is provided at a rear side of the terminal's housing, opposite the front side 201. Other well-known components may also be provided, such as power switch, battery, charger interface, accessory interface, volume controls and external antenna, but are not indicated in Fig 2a in order not to obscure the disclosure in unnecessary detail.

Another embodiment 250 of the mobile terminal 100 is shown in Fig 2b. The mobile terminal 200 of this embodiment is of smart phone-type and has a touch-sensitive display screen 253 provided at a front side 251 of the terminal housing. A virtual keypad 254 is presentable on the display screen 253. The virtual keypad 254 is capable of multi-tap entry and has a plurality of touchable elements 254a arranged in a grid layout. Just like the mechanical keys 204a of Fig 2a, each touchable element 254a represents a list of available symbols, which may be cycled through sequentially by way of multi-tapping on the element in order to enter text 253a on the display screen 253, the current cursor position being indicated at 253b.

The front side 251 has a loudspeaker 252 and a microphone 255. Certain special keys, even mechanical ones, may be provided in addition to the touch-sensitive display screen 253, even though not shown in Fig 2b. Also, other well-known components, such as camera, power switch, battery, charger interface, accessory interface, volume controls and external antenna, may be provided but are not indicated in Fig 2b.

Other kinds of mobile terminals are also fully conceivable embodiments of a portable electronic device according to the present invention. Mobile terminals having two main housing parts hinged together to form a clamshell phone or a swivel phone are some examples that are worth mentioning.

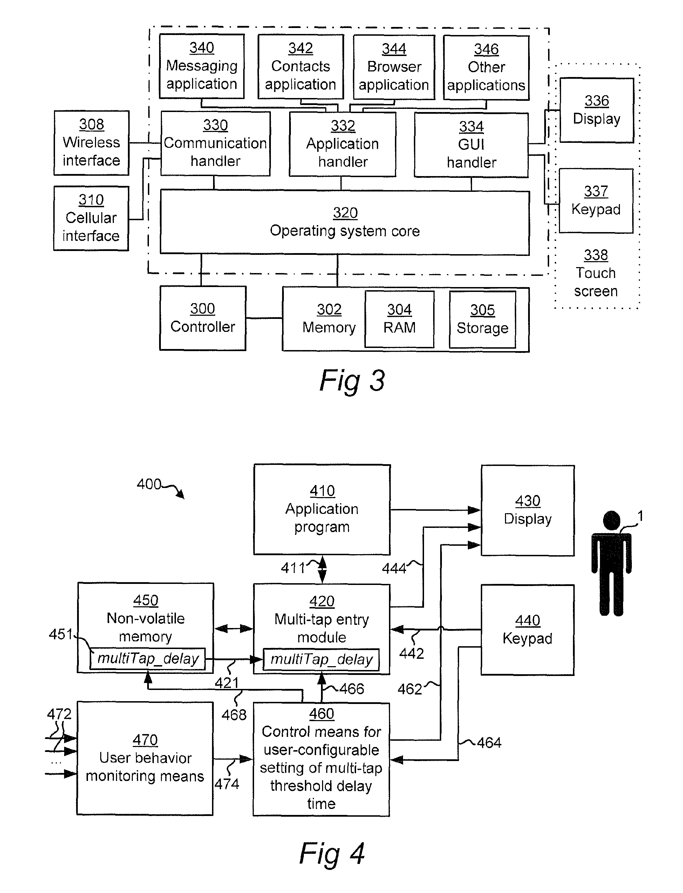

The internal software and hardware structure of the mobile terminal 200 or 250 according to any of the embodiments shown in Figs 2a and 2b will now be described with reference to Fig 3. Software components are indicated within a dash-dotted frame, whereas hardware components are outside of this frame. The mobile terminal 200/250 has a controller 300 being responsible for general device operations. Any commercially available central processing unit (CPU) or digital signal processor (DSP), or other programmable electronic logic device such as an application-specific integrated circuit (ASIC) or field-programmable gate array (FPGA), may be used to implement the controller 300. The controller 300 has associated memory 302 which includes a work memory (RAM) 304 and a non-volatile storage memory 305, for instance in the form of EEPROM, flash memory (e.g. memory card), hard disk, or any combination thereof. The controller 300 uses the memory 302 for different purposes, for instance for storing file objects as well as data and program instructions for the software in the mobile terminal 200/250.

The software includes an operating system core 320 on a lower level, application programs 340-346 on an upper level for interaction with the user 1, and drivers and handlers for the hardware and the application programs on an intermediate level. The intermediate level includes a GUI handler 334 which forms a user interface towards the user 1 by controlling display 336 (203/253), keypad 337 (204/254) as well as other I/O devices which may be included in the mobile terminal 200/250 (e.g. microphone, loudspeaker, vibrator, ringtone generator, LED status indicator, audio volume controls, etc). When the display 336 comprises a touch-sensitive display screen 338, like display screen 253 in Fig 2b, the GUI handler 334 controls this display screen 338 to act both as an output device and an input device.

An application handler 332 controls the application programs 340-346, which may include a messaging (e.g. SMS, MMS or email) application 340, a contacts application 342, a browser (e.g. www, wap) application 344, as well as various other applications 346, such as applications for voice calls, video calls, calendar, file handling, a control panel or settings application, a camera application, one or more video games, a word processing application, a spreadsheet application, a drawing application, a slideshow presentation application, etc.

The software also includes various modules, protocol stacks, drivers, etc., which are commonly designated as communication handler 330 and which provide communication support for a cellular interface 310 and, optionally, a wireless interface for Bluetooth, WLAN, NFC or IrDA (commonly designated as 308 in Fig 3). The cellular interface 310 comprises an internal or external antenna as well as appropriate radio circuitry for establishing and maintaining a wireless link to a base station (e.g. the link 111 and base station 112 in Fig 1). The radio circuitry comprises a radio transmitter and receiver (transceiver; TX/RX), formed for instance by band pass filters, amplifiers, mixers, local oscillators, low pass filters, AD/DA converters, etc.

With reference to Fig 4, an arrangement 400 of some main elements of a portable electronic device, which is enabled for user-configurable setting of the threshold delay time for multi-tap entry in accordance with embodiments of the invention, will now be described. The description is made with exemplifying reference to the embodiment of Fig 2a, where the portable electronic device is implemented as a mobile terminal 200; however, the skilled person readily realizes that the arrangement 400 could also be applied to other embodiments, including but not limited to the smart phone terminal 250 of Fig 2b.

As seen in Fig 4, the arrangement 400 comprises a multi-tap entry module 420 which can be invoked whenever an application program 410 (such as one of the application programs 340-346 of Fig 3) requires text input from the user 1. The multi-tap entry module 420 may be implemented in software and is advantageously a part of the GUI handler 334 of Fig 3. The multi-tap entry module 420 is operatively connected to a display 430 and a keypad 440 (e.g. display 203 and keypad 204 of Fig 2a) to detect actuation of any of the keys in the keypad 430, and in response present on the display 430 a first symbol in the available symbol set associated with the actuated key. See 442 and 444 in Fig 4. The multi-tap entry module 420 then monitors the keypad 440 to decide whether or not the same key is actuated again within a time lapse which is shorter than a threshold delay time, i.e. whether or not a timeout occurs. The threshold delay time is represented by a variable *multiTap_delay,* the value of which may be configured by the user 1 as will be apparent from the following description. To this end, control means 460 for user-configurable setting of the threshold delay time is provided.

When the time lapse between two successive actuations of one and the same particular key in the keypad 440 is shorter than the threshold delay time *multiTap_delay* (i.e., no timeout), a first action is taken on the display 430, and otherwise (e.g., timeout) a second action is taken on the display. For the mobile terminal 200, the first action involves replacing, without cursor advancement, a currently presented character with a subsequent character on the display 203, wherein both characters are associated with that particular key since they both belong to the set of available symbols for that key. In the situation shown in Fig 2a, the first action might comprise replacing the character "N" with the subsequent character "O" at the current cursor position 203b when the "6" key is again actuated within the threshold delay time. Conversely, the second action (i.e. after a timeout or an actuation of another key than the "6" key) might comprise keeping the currently presented character "N" on the display and advancing the cursor position 203b one step to the right. The text entry thus made is communicated (see 411 in Fig 4) by the multi-tap entry module 420 to the application program 410 that requested it. This can be made character by character, or once the whole text entry is completed.

The function and nature of the control means 460 for user-configurable setting of the threshold delay time will now be described in more detail. The control means 460 serves to make the threshold delay time adaptable to the individual needs and preferences of the user 1. To this end, the threshold delay time is represented by the aforementioned variable *multiTap_delay;* i.e. not a constant or a hardcoded value. The variable *multiTap_delay* is set to a default value if no user configuration has occurred. The default value may be read from a memory area 451 in a non-volatile memory 450 (e.g. storage memory 305 of Fig 3), when the mobile terminal 200 is powered on or subjected to a system reset, and the variable *multiTap_delay* will be assigned to the read default value (see 421 in Fig 4).

In one embodiment, the control means 460 is configured to offer on the display 430 a plurality of available setting values of the threshold delay time (see 462 in Fig 4). The default value may be one of these available setting values. For instance, the available setting values of the threshold delay time may be 50 ms, 100 ms and 150 ms, where 100 ms is the default value. Both the number of available setting values and their respective values can of course vary considerably depending on implementation. The user 1 may thus select one of these offered values by actuating a key on the keypad 430 (see 464 in Fig 4), or another I/O device. The control means 460 will then accept the selected setting value, and set the threshold delay time *multiTap_delay* to the selected setting value, see 466 in Fig 4.

Advantageously, the control means 460 is further configured to store the selected setting value in the memory area 451 of the non-volatile memory 450, see 468 in Fig 4. Thus, the next time the mobile terminal 200 is powered on or subjected to a system reset, the stored selected setting value will be read at 421 in Fig 4 from the non-volatile memory 450, and the variable *multiTap_delay* for the threshold delay time will be set to the read selected setting value rather than the default value.

In some embodiments, user behavior monitoring means 470 is provided to further enhance the user configurability of the threshold delay time. The user behavior monitoring means 470 is configured to watch for a predefined user behavior pattern and, upon detection of this user behavior pattern, alert the control means 460 of this fact (see 474 in Fig 4).

When the user behavior monitoring means 470 has detected the user behavior pattern, it will cause the control means 460 to present on the display 430 an offer to change the threshold delay time to a value reflecting the detected user behavior pattern. After having accepted a confirmation from the user 1 by way of the keypad 440 or another I/O device, the control means 460 will set the threshold delay time *multiTap_delay* to the offered and accepted value, see 466 in Fig 4.

Advantageously, the control means 460 is further configured to store the offered and accepted value in the non-volatile memory, in the memory area 451 of the non-volatile memory 450, see 468 in Fig 4. Again, the next time the mobile terminal 200 is powered on or subjected to a system reset, the stored value may be read at 421 in Fig 4 from the non-volatile memory 450, whereupon the variable *multiTap_delay* for the threshold delay time will be set to the read value rather than the default value.

In order to watch for the predefined user behavior pattern, the user behavior monitoring means 470 may use input signals 472 from various components of the mobile terminal 200. In one embodiment, the predefined user behavior pattern is when the user 1 has been found to use of one or more other services than pure voice calls. Such other services may for instance involve the use of the camera 206 for picture taking or MMS messaging, the keypad 203 for input of extensive text volumes (in contrast to the mere dialing of telephone numbers for voice calls), the display for presentation of other data than voice call related data, such as www browser or video game data, the loudspeaker 202 for other audio than voices (e.g. music tunes or game sound effects), or the memory 302 for storing file objects. The rationale behind this is that when the user 1 has been found to use services like these, that kind of user behavior pattern is an indication that the user 1 is probably an experienced user and should therefore benefit from being offered a shorter threshold delay time than default. Thus, the user behavior monitoring means 470 may conclude that the predefined user behavior pattern has been detected and alert the control means 460 accordingly, such that it will offer the user 1 a shorter threshold delay time. The predefined user behavior pattern may contain qualifiers or lower limits as to the frequency or duration of use of the service in question, or be confined to only certain specific services.

In one embodiment, the predefined user behavior pattern involves that the user has made one or more changes among the various user-configurable settings in the graphical user interface of the mobile terminal 200. Such changes may pertain to UI themes, desktop images, ringtones, messaging settings (e.g. delivery or announcement parameters), etc. Again, such user behavior is an indication to the user behavior monitoring means 470 that the user 1 is probably an experienced user and should therefore be offered a shorter threshold delay time than default by the control means 460.

In one embodiment, the predefined user behavior pattern involves downloading, installation or execution of a particular application program or type of application program among the application programs 340-346. For instance, when a video game, media player or instant messaging application is downloaded, installed or executed, it may be assessed that this is probably because the user is experienced and should therefore benefit from being offered a shorter threshold delay time than default. Conversely, when for instance a medication reminder application, elderly care application or visual aid application is downloaded, installed or executed, it may be assessed that the user might benefit from being offered a longer threshold delay time than default.

The control means 460 may be implemented in hardware, or alternatively as software in the portable electronic device (in the latter case, for instance as a part of the GUI handler 334, operating system core 320, or even one of the application programs 340-346), or as a combination thereof. The same goes for the user behavior monitoring means 470, if provided. In some embodiments, the control means 460 and the user behavior monitoring means 470 may be combined into one common unit or module.

The invention has been described above in detail with reference to embodiments thereof. However, as is readily understood by those skilled in the art, other embodiments are equally possible within the scope of the present invention, as defined by the appended claims.

## Claims

1. A portable electronic device comprising
a display (430; 336; 203; 253); and
a keypad (440; 337; 204; 254) having a plurality of keys (204a; 254a), at least some of which have multiple functions, specifically such that when a time lapse between two successive actuations of one and the same particular key is shorter than a threshold delay time (*multiTap_delay*)*,* a first action is taken on said display, whereas otherwise a second action is taken on said display, **characterized by**
control means (460) for user-configurable setting of said threshold delay time (*multiTap_delay*)*.*

2. The portable electronic device according to claim 1, said keypad (204; 254) supporting multi-tap text entry for presentation on said display (203; 253),
wherein said first action is replacing on said display, without cursor advancement (203b; 253b), a currently presented character with a subsequent character, both associated with said particular key, and
wherein said second action is keeping said currently presented character on said display and advancing the cursor (203b; 253b).

3. The portable electronic device according to claim 1 or 2, wherein said control means (460) is configured to
offer on said display (430; 336; 203; 253) a plurality of available setting values of said threshold delay time for selection by a user (1) of the portable electronic device,
accept a selected one of said available setting values, and
set said threshold delay time (*multiTap_delay*) to said selected setting value.

4. The portable electronic device according to claim 3, further comprising a non-volatile memory (450; 305), wherein said control means (460) is configured to
store said selected setting value in said non-volatile memory, read, upon power-on or system reset of said portable electronic device, said stored selected setting value from said non-volatile memory, and
set said threshold delay time (*multiTap_delay*) to said read value.

5. The portable electronic device according to any preceding claim, further comprising user behavior monitoring means (470) configured to watch for a predefined user behavior pattern and, upon detection of said user behavior pattern, cause said control means (460) to
present on said display (430; 336; 203; 253) an offer to change said threshold delay time to a value reflecting said user behavior pattern,
accept a confirmation from the user (1), and
set said threshold delay time (*multiTap_delay*) to the offered and accepted value.

6. The portable electronic device according to claim 5, further comprising a non-volatile memory, wherein said control means is configured to
store said offered and accepted value in said non-volatile memory (450; 305), read, upon power-on or system reset of said portable electronic device, said stored value from said non-volatile memory, and
set said threshold delay time (*multiTap_delay*) to said read value.

7. The portable electronic device according to claim 5 or 6, further having a radio transceiver (310) for connection to a mobile telecommunication network (110), wherein the predefined user behavior pattern involves use of one or more other services in said portable electronic device than voice calls, and wherein the offered value represents a shorter threshold delay time than a default threshold delay time.

8. The portable electronic device according to any of claims 5-7, further having a graphical user interface with a plurality of user-configurable settings, wherein the predefined user behavior pattern involves that the user has made one or more changes to said user-configurable settings, and wherein the offered value represents a shorter threshold delay time than a default threshold delay time.

9. The portable electronic device according to any of claims 5-8, further having an operating system capable of executing one or more application programs (340-346), wherein the predefined user behavior pattern involves downloading, installation or execution of a particular application program or type of application program.

10. The portable electronic device according to any preceding claim, wherein said keypad is an ITU-T type keyboard (204).

11. The portable electronic device according to any of claims 1-9, wherein said display is a touch-sensitive display screen (253; 338) and said keypad is a virtual keypad (254) presentable on said touch-sensitive display screen.
